(19) Europäisches Patentamt

European Patent Office

Office européen des brevets

(11) **EP 1 700 879 A1**

(12) **EUROPEAN PATENT APPLICATION**

(43) Veröffentlichungstag:
**13.09.2006 Patentblatt 2006/37**

(51) Int Cl.:
*C08J 7/00* (2006.01)   *C08J 7/04* (2006.01)
*C08L 67/00* (2006.01)   *C08L 67/02* (2006.01)
*C08J 5/00* (2006.01)   *C08J 5/18* (2006.01)
*C08K 3/00* (2006.01)

(21) Anmeldenummer: 06004521.8

(22) Anmeldetag: **06.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **12.03.2005   DE 102005011470**

(71) Anmelder: **Mitsubishi Polyester Film GmbH**
**65023 Wiesbaden (DE)**

(72) Erfinder:
• **Klein, Dagmar, Dr.**
**65437 Ockenheim (DE)**
• **Peiffer, Herbert, Dr. Professor**
**55126 Mainz (DE)**
• **Konrad, Matthias, Dr.**
**65719 Hofheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(54) **Biaxial orientierte Polyesterfolie mit hoher Sauerstoffbarriere**

(57)   Die Erfindung betrifft eine biaxial orientierte Polyesterfolie mit einer Basisschicht B, die zu mindestens 80 Gew.-% aus einem thermoplastischen Polyester besteht, mindestens einer Deckschicht A und einer auf der Deckschicht A angeordneten metallischen oder keramischen Schicht D. Die Deckschicht A enthält Polyesterrohstoffe und Poly(m-xylol-adipinamid) in bestimmten Konzentrationen. Die Erfindung betrifft weiterhin ein Verfahren zur Herstellung der Folie und ihre Verwendung.

Die metallisierte oder keramisch beschichtete Folie besitzt eine geringe Durchlässigkeit für Luftsauerstoff und zeigt eine sehr gute Haftkraft zwischen den jeweiligen Schichten. Sie eignet sich besonders für Verpackungszwecke, speziell zur Verpackung von Lebens- und Genussmitteln.

**EP 1 700 879 A1**

**Beschreibung**

Die Erfindung betrifft eine metallisierte oder keramisch beschichtete biaxial orientierte Polyesterfolie mit einer Basisschicht B, die zu mindestens 80 Gew.-% aus einem thermoplastischen Polyester besteht, und mindestens einer Deckschicht A. Die Deckschicht A enthält Polyesterrohstoffe und Poly(m-xylol-adipinamid) in bestimmten Konzentrationen. Die Erfindung betrifft weiterhin ein Verfahren zur Herstellung der Folie und ihre Verwendung.

Metallisierte oder keramisch beschichtete biaxial orientierte Polyesterfolien, die sich durch verbesserte Barriereeigenschaften auszeichnen, sind nach dem Stand der Technik bekannt.

In der EP-A 0 878 298 wird eine biaxial orientierte Polyesterfolie mit einer Basisschicht B und mindestens einer Deckschicht A beschrieben. Auf der Deckschicht A befindet sich eine $O_2$-barrierefunktionale Schicht. Die Deckschicht A besteht aus einem Gemisch von Polymeren, das mindestens 40 Gew.-% Ethylen-2,6-naphthalat-Einheiten und bis zu 40 Gew.-% Ethylen-terephthalat-Einheiten und/oder bis zu 60 % Einheiten aus cycloaliphatischen oder aromatischen Diolen und/oder Dicarbonsäuren enthält. Die bekannte Folie ist allerdings von ihren Barriereeigenschaften, insbesondere gegenüber Sauerstoff, bezüglich der inneren Haftung der Schichten untereinander und der Herstellbarkeit noch verbesserungswürdig.

In der EP-A 1 179 419 wird eine metallisierte oder keramisch beschichtete, biaxial orientierte Polyesterfolie mit einer Basisschicht B und mindestens einer Deckschicht A beschrieben. Die Deckschicht A besteht dabei aus einem Copolymeren oder einem Gemisch von Polymeren/Copolymeren, das Ethylen-2,6-naphthalat-Einheiten in einem Bereich von 90 bis 98 Gew.-% und bis zu 10 Gew.-% an Ethylen-terephthalat-Einheiten und/oder Einheiten aus cycloaliphatischen oder aromatischen Diolen und/oder Dicarbonsäuren enthält. Die Folie besitzt zwar eine geringe Durchlässigkeit für Luftsauerstoff und zeigt eine sehr gute Haftfestigkeit zwischen den jeweiligen Schichten, die metallisierte oder keramisch beschichtete Folie ist aber bezüglich der Barriereeigenschaften, insbesondere gegenüber Sauerstoff, immer noch verbesserungswürdig.

Aufgabe der vorliegenden Erfindung war es, eine metallisierte oder keramisch beschichtete, biaxial orientierte Polyesterfolie mit einer Basisschicht B und mindestens einer Deckschicht A zur Verfügung zu stellen, mit der die Nachteile der Folien aus dem Stand der Technik insofern überwunden werden, als sich in ihr vor allem die nachfolgend aufgezählten Qualitätskriterien verwirklichen:

- verbesserte Barriereeigenschaften, insbesondere gegenüber Sauerstoff;
- verbesserte Haftkraft zwischen den jeweiligen Schichten;
- niedrige Rauigkeitswerte $R_a$ der Deckschicht A, so dass die Folie gut zu metallisieren oder im Vakuum mit transparenten Materialen ($SiO_x$, $Al_2O_y$) zu beschichten ist;
- verbesserte Wickelung und verbessertes Verarbeitungsverhalten und
- insofern wirtschaftliche Herstellung als z. B. gewährleistet ist, dass bei der Folienherstellung anfallender Folienverschnitt als Regenerat in einer Menge von bis zu 60 Gew.-% wieder der Extrusion zugeführt werden kann, ohne dass dabei die optischen Eigenschaften der Folie, insbesondere aber ihre Barriereeigenschaften gegenüber Sauerstoff, negativ beeinträchtigt werden.

Gelöst wird diese Aufgabe durch eine biaxial orientierte Polyesterfolie mit einer Basisschicht B, die zu mindestens 80 Gew.-% aus einem thermoplastischen Polyester besteht, mindestens einer Deckschicht A und einer auf der Deckschicht A angeordneten, metallischen oder keramischen Schicht D, wobei die Deckschicht A aus einem Gemisch von Homo- und Copolymeren aufgebaut ist, das

- Ethylenterephthalat und/oder Ethylenisophthalat-Einheiten in einer Menge von 5 bis 65 Gew.-%,
- Ethylen-2,6-naphthalat-Einheiten in einer Menge von 20 bis 80 Gew.-% und
- Poly(m-xylol-adipinamid) (MXD6) in einer Menge von 15 bis 40 Gew.-% enthält, jeweils bezogen auf das Gesamtgewicht der Deckschicht A.

Die erfindungsgemäße, metallisierte oder keramisch beschichtete Folie weist eine Sauerstoffpermeation von weniger als 0,4 cm³/(m²·bar·d) auf und eine Mindesthaftung zwischen den Schichten A und B von größer/gleich 1,0 N/15 mm.

Die erfindungsgemäße Folie ist vorzugsweise dreischichtig aufgebaut. Sie besteht dann, abgesehen von der auf der Deckschicht A aufgebrachten metallischen oder keramischen Schicht D, aus der Deckschicht A, der Basisschicht B und einer weiteren Deckschicht C.

**Die Basisschicht B**

Die Basisschicht der Folie besteht bevorzugt zu mindestens 90 Gew.-% aus einem thermoplastischen Polyester.

Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel $HO-(CH_2)_n-OH$, wobei n eine ganze Zahl von 3 bis 6 darstellt, verzweigte aliphatische Glykole mit bis zu 6 Kohlenstoff-Atomen, aromatische Diole der allgemeinen Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht, oder Bisphenole der allgemeinen Formel $HO-C_6H_4-C_6H_4-OH$.

Die Dicarbonsäure-Comonomereinheiten leiten sich bevorzugt ab von Benzoldicarbonsäuren, Naphthalindicarbonsäuren, Biphenyl-x,x'-dicarbonsäuren, insbesondere Biphenyl-4,4'-dicarbonsäure, Cyclohexandicarbonsäuren, insbesondere Cyclohexan-1,4-dicarbonsäure, Diphenylacetylen-x,x'-dicarbonsäuren, insbesondere Diphenylacetylen-4,4'-dicarbonsäure, Stilben-x,x'-dicarbonsäure oder $(C_1-C_{16})$Alkandicarbonsäuren, wobei der Alkananteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren wie Zink-, Calcium-, Lithium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

**Die Deckschicht A**

Die Deckschicht A enthält Ethylenterephthalat und/oder Ethylenisophthalat-Einheiten in einer Menge von 5 bis 65 Gew.-%. Bevorzugt enthält sie diese Rohstoffe in einer Menge von 6 bis 64 Gew.-% und besonders bevorzugt in einer Menge von 7 bis 63 Gew.-%. Für die Deckschicht A können prinzipiell die gleichen (Polyester-) Polymere verwendet werden wie für die Basisschicht B, insbesondere aber Polyethylenterephthalat.

Besonders zweckmäßig ist, wenn in der Deckschicht A ein Polyester-Copolymer auf Basis von Isophthalsäure und Terephthalsäure verwendet wird. In diesem Fall sind die optischen Eigenschaften der Folie besonders gut.

In diesem Fall enthält die Deckschicht A der Folie im Wesentlichen ein Polyester-Copolymer, das überwiegend aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. Dicarbonsäuren, wie sie in der Basisschicht vorkommen können. Die bevorzugten Copolyester, die besonders geeignet sich, um die gewünschten Eigenschaften der Folie bereitzustellen, sind solche, die aus Terephthalat- und Isophthalat-Einheiten und aus Ethylenglykol-Einheiten aufgebaut sind. Der Anteil an Ethylenterephthalat beträgt 60 bis 97 Mol-% und der entsprechende Anteil an Ethylenisophthalat 40 bis 3 Mol-%. Bevorzugt sind Copolyester, bei denen der Anteil an Ethylenterephthalat 70 bis 95 Mol-% und der entsprechende Anteil an Ethylenisophthalat 30 bis 5 Mol-% beträgt.

Die Deckschicht A enthält weiterhin Ethylen-2,6-naphthalat-Einheiten in einer Menge von 20 bis 80 Gew.-%. Bevorzugt enthält sie diesen Rohstoff in einer Menge von 22 bis 78 Gew.-% und besonders bevorzugt in einer Menge von 24 bis 76 Gew.-%.

Erfindungsgemäß enthält die Deckschicht A als eine weitere Komponente Poly(m-xyloladipinamid) (MXD6) in einer Menge von 15 bis 40 Gew.-%, bevorzugt in einer Menge von 16 bis 39 Gew.-% und besonders bevorzugt in einer Menge von 17 bis 38 Gew.-%, bezogen auf das Gewicht der Deckschicht A.

Die Dicke der Deckschicht A ist größer als 0,9 $\mu$m und liegt bevorzugt im Bereich von 1,0 bis 10 $\mu$m und besonders bevorzugt im Bereich von 1,1 bis 5 $\mu$m.

Die Basisschicht B und die beiden Deckschichten A und C können zusätzlich übliche Additive wie Stabilisatoren und Antiblockmittel enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt. Typische Antiblockmittel, in diesem Zusammenhang gelegentlich auch als Pigmente bezeichnet, sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithium Florid, Calcium-, Barium-, Zink-oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikel können den jeweiligen Schichten in den dafür vorgesehenen Konzentrationen, z. B. als glykolische Dispersion während der Polykondensation oder über Masterbatche bei der Extrusion zugegeben werden.

In einer bevorzugten Ausführungsform der Erfindung beträgt der Füllstoffanteil in der Deckschicht A weniger als 0,1 Gew.-%, bevorzugt weniger als 0,05 Gew.-%, und besonders bevorzugt ist diese Deckschicht frei von externen Füllstoffen/Pigmenten. Falls die Deckschicht A mit Pigmenten gefüllt ist, werden zweckmäßigerweise die gleichen Pigmente verwendet wie im Folgenden bei der Deckschicht C näher beschrieben.

Die Rauigkeit $R_a$ der unmetallisierten bzw. der noch nicht mit einer keramischen Schicht versehenen Oberfläche der Deckschicht A ist kleiner als 50 nm. In einer bevorzugten Ausführungsform beträgt die Rauigkeit $R_a$ der Oberfläche der Deckschicht A weniger als 45 nm, und in einer besonders bevorzugten Ausführungsform beträgt sie weniger als 40 nm.

Diese Folienoberfläche eignet sich daher besonders für die Aufnahme einer weiteren funktionellen Beschichtung für die Bedruckung oder für die Metallisierung. Der hohe Glanz der Folie überträgt sich auf den Druck oder die aufgebrachte Metallschicht und verleiht somit der Folie ein besonders werbewirksames Aussehen, das so gewollt ist.

## Deckschicht C

Die Deckschicht C wird im Wesentlichen aus denselben Rohstoffen aufgebaut wie die Basisschicht B. Zur Erzielung einer guten Wickelung und einer guten Verarbeitbarkeit der Folie enthält die Deckschicht C ein Pigmentsystem, bei dem der mittlere Durchmesser ($d_{50}$-Wert) im Bereich von 2,0 bis 5,0 $\mu$m und der SPAN 98 im Bereich von 1,2 und 2,0 liegen.

In der bevorzugten Ausführungsform enthält die Deckschicht C ein Pigmentsystem, bei dem der mittlere Durchmesser im Bereich von 2,1 bis 4,9 $\mu$m und der SPAN98 im Bereich von 1,25 und 1,9 liegt. In der besonders bevorzugten Ausführungsform enthält die Deckschicht C ein Pigmentsystem, bei dem der mittlere Durchmesser im Bereich von 2,2 bis 4,8 $\mu$m und der SPAN98 im Bereich von 1,3 und 1,8 liegt.

Die Deckschicht C wird zur Verbesserung des Wickelverhaltens und der Verarbeitbarkeit vergleichsweise hoch mit inerten Pigmenten gefüllt. Die Konzentration der inerten Partikel in der Deckschicht C liegt zwischen 0,10 und 0,4 Gew.-%, in der bevorzugten Ausführungsform zwischen 0,14 und 0,38 Gew.-% und in der besonders bevorzugten Ausführungsform zwischen 0,16 und 0,36 Gew.-%, bezogen auf das Gewicht der Deckschicht. Die Konzentration der inerten Partikel richtet sich im Wesentlichen nach den zu erzielenden optischen Eigenschaften der Folie.

Die Deckschicht C kann neben den Pigmenten auch Poly(m-xylol-adipinamid) (MXD6) enthalten in einer Menge von 10 bis 45 Gew.-%, bevorzugt 11 bis 43 Gew.-% und besonders bevorzugt 12 bis 40 Gew.-%, bezogen auf die Deckschicht C.

Die Rauigkeit $R_a$ der Folienoberfläche C ist größer als 40 nm. In einer bevorzugten Ausführungsform beträgt die Rauigkeit $R_a$ der Folienoberfläche C mehr als 45 nm, und in einer besonders bevorzugten Ausführungsform beträgt die Rauigkeit $R_a$ der Folienoberfläche C mehr als 50 nm.

Die Dicke der Deckschicht C ist größer als 0,9 $\mu$m und liegt bevorzugt im Bereich von 1,0 bis 10 $\mu$m, besonders bevorzugt im Bereich von 1,1 bis 5 $\mu$m.

Die Gesamtdicke der erfindungsgemäßen Polyesterfolie beträgt 6 bis 300 $\mu$m, vorzugsweise 8 bis 200 $\mu$m, besonders bevorzugt 10 bis 100 $\mu$m, wobei auf die Basisschicht (B) ein Anteil von vorzugsweise 40 bis 99 % an der Gesamtdicke entfällt.

Die Metallisierung besteht bevorzugt aus Aluminium, das sich leicht im Vakuum aufdampfen lässt. Es sind aber auch andere Materialien geeignet, die sich in Form einer dünnen, zusammenhängenden Schicht aufbringen lassen. Ganz besonders ist z. B. Silizium geeignet, welches im Vergleich zu Aluminium eine transparente Barriereschicht ergibt. Die keramische Schicht besteht bevorzugt aus Oxiden von Elementen der II., III, oder IV. Hauptgruppe des Periodensystems der Elemente, insbesondere Oxiden des Magnesiums, Aluminiums oder Siliziums. Allgemein sind solche metallischen oder keramischen Materialien gut zu verwenden, die bei vermindertem Druck bzw. im Vakuum aufgebracht werden können. Die Dicke der aufgebrachten Schicht beträgt allgemein 10 bis 100 nm.

## Verfahren

Gegenstand der Erfindung ist auch ein Verfahren zur Herstellung der Folie. Zur Herstellung der Basisschicht B wird zweckmäßig das Polyestergranulat direkt dem Extruder für die Basisschicht B zugeführt. Das Polyestergranulat lässt sich bei etwa 270 bis 300 °C extrudieren.

Die Polymeren für die Deckschichten A und C werden zweckmäßig über jeweils weitere Extruder, wobei prinzipiell der Zweischneckenextruder dem Einschneckenextruder vorzuziehen ist, insbesondere bei Deckschicht A, dem Koextrusions-System zugeführt. Da das MXD6 keine höhere Temperatur als 275 °C verträgt, wird der Koextruder für die Deckschicht A bei Temperaturen von maximal bis zu 275 °C betrieben. Die Schmelzen der Kunststoffe werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird im Allgemeinen sequenziell durchgeführt. Dabei wird vorzugsweise erst in Längsrichtung (d. h. in Maschinenrichtung) und anschließend in Querrichtung (d. h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 (Aufheiztemperaturen 80 bis 130 °C) bis 130 °C (Strecktemperaturen 80 bis 130 °C, abhängig vom Streckverhältnis) und die Querstreckung in einem Temperaturbereich von 90 (Beginn der Streckung) bis 140 °C (Ende der Streckung) durchgeführt. Das Längsstreckverhältnis liegt im Bereich von 2,0 : 1 bis 5,0 : 1, bevorzugt von 2,3 : 1 bis 4,8 : 1. Das Querstreckverhältnis liegt allgemein im Bereich von 2,5 : 1 bis 5,0 : 1, bevorzugt von 2,7 : 1 bis 4,5 : 1.

Vor der Querstreckung kann man eine oder beide Oberflächen der Folie nach den bekannten Verfahren in-line beschichten. Die In-line-Beschichtung kann beispielsweise zu einer verbesserten Haftung einer Metallschicht oder einer eventuell aufgebrachten Druckfarbe, aber auch zur Verbesserung des antistatischen Verhaltens, des Verarbeitungsverhaltens oder auch zur weiteren Verbesserung der Barriere führen. Dazu eignet sich insbesondere die Auftragung von Barrierebeschichtungen, die z. B. EVOH, PVOH oder dergleichen enthalten. Vorzugsweise werden solche Schichten dann auf die glattere (= weniger raue) Oberfläche der Folie aufgetragen.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise abgekühlt und aufgewickelt.

Bei der Herstellung der Folie ist gewährleistet, dass Verschnittmaterial, das bei der Folienherstellung im Betrieb immanent anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich daneben hervorragend zum Metallisieren oder zum Vakuumbeschichten mit keramischen Substanzen. Sie zeichnet sich dann ganz besonders durch hervorragende Barriereeigenschaften, insbesondere gegenüber Sauerstoff aus.

Das Aufbringen der Metallschicht bzw. der keramischen Schicht erfolgt zweckmäßig auf allgemein üblichen industriellen Anlagen. Metallschichten aus Aluminium werden üblicherweise durch Bedampfen hergestellt, während keramische Schichten daneben auch mit Elektronenstrahlverfahren oder durch Aufsputtern erzeugt werden können. Die Verfahrensparameter der Anlage beim Aufbringen der Metallschicht bzw. der keramischen Schicht auf die Folien entsprechen den Standardbedingungen. Die Metallisierung der Folien wird vorzugsweise so durchgeführt, dass die optische Dichte der metallisierten Folien im üblichen Bereich von ca. 2,0 bis 3,2 liegt. Das Aufbringen der keramischen Schicht auf die Folie wird so durchgeführt, dass die Schichtstärke der Oxidschicht vorzugsweise im Bereich von 30 bis 100 nm liegt. Die Bahngeschwindigkeit der zu beschichtenden Folie liegt bei allen Einstellungen zwischen 5 und 10 m/s. Auf die Metallisierung mit einer Laborbedampfungsanlage wurde nicht zurückgegriffen, weil die Erfahrung gezeigt hat, dass dann die Barrierewerte in der Regel wesentlich höher sind und nicht zu Vergleichszwecken herangezogen werden können.

Die nachstehende Tabelle (Tabelle 1) fasst die wichtigsten erfindungsgemäßen Folieneigenschaften noch einmal auf einen Blick zusammen.

Tabelle 1

| | Erfindungsgemäßer Bereich | Bevorzugt | Besonders bevorzugt | Einheit | Messmethode |
|---|---|---|---|---|---|
| **Deckschicht A** | | | | | |
| Ethylen-terephthalat/ isophthalat-Einheiten | 5 bis 65 | 6 bis 64 | 7 bis 63 | | |
| Ethylen-2,6-naphthalat-Einheiten | 20 bis 80 | 22 bis 78 | 24 bis 76 | | |
| Poly(m-xylol-adipinamid) (MXD6) | 15 bis 40 | 16 bis 39 | 17 bis 38 | | |
| Dicke der Deckschicht A | > 0,9 | 1,0 bis 10 | 1,1 bis 5 | μm | |
| Füllstoffkonzentration des Pigmentsystems | < 0,1 | < 0,05 | pigmentfrei | % | intern |

(fortgesetzt)

| | Erfindungsgemäßer Bereich | Bevorzugt | Besonders bevorzugt | Einheit | Messmethode |
|---|---|---|---|---|---|
| **Deckschicht A** | | | | | |
| Rauigkeit der Deckschicht A | < 50 | < 45 | < 40 | nm | DIN 4768 |
| Glanz der Deckschicht A (60°-Messwinkel) | > 150 | > 155 | > 160 | | DIN 67530 |
| **Deckschicht C** | | | | | |
| Füllstoffkonzentration des Pigmentsystems | 0,10 bis 0,4 | 0,14 bis 0,38 | 0,16 bis 0,36 | % | intern |
| Partikeldurchmesser $d_{50}$ des Pigmentsystems | 2,0 bis 5 | 2,1 bis 4,9 | 2,2 bis 4,8 | $\mu$m | intern |
| SPAN98 des Pigmentsystems | 1,2 bis 2,0 | 1,25 bis 1,9 | 1,3 bis 1,8 | $\mu$m | intern |
| Rauigkeit der Deckschicht C | > 40 | > 45 | > 50 | nm | DIN 4768 |
| Dicke der Deckschicht C | > 0,9 | 1,0 bis 10 | 1,1 bis 5 | $\mu$m | |
| **Folieneigenschaften** | | | | | |
| Sauerstoffpermeation | < 0,4 | < 0,35 | < 0,3 | $cm^3/(m^2 \cdot bar \cdot d)$ | intern |
| Haftung zwischen den Schichten | 1,0 bis 10 | 1,2 bis 10 | 1,5 bis 10 | N/15mm | intern |

Messmethoden:

Zur Charakterisierung der Rohstoffe und der Folien wurden die folgenden Methoden benutzt:

**Sauerstoffdurchlässigkeit**

Die Messung der Sauerstoffbarriere erfolgte mit einem OX-TRAN 2/20 von Mocon Modern Controls (USA) entsprechend DIN 53 380, Teil 3.

**Messung der optischen Dichte**

Zur Messung der optischen Dichte wurde das Densitometer Macbeth TD-904 von Macbeth (Division of Kollmorgen Instruments Corp.) eingesetzt. Die optische Dichte ist definiert als OD = - lg $I/I_0$ , wobei I die Intensität des eingestrahlten Lichtes, $I_0$ die Intensität des ausgestrahlten Lichtes und $I/I_0$ die Transmission bedeuten.

**SV-Wert (standard viscosity)**

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV = [\eta] = 6{,}907 \cdot 10^{-4} \; SV \, (DCE) + 0{,}063096 \; [dl/g]$$

**Rauigkeit**

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Messung des mittleren Partikeldurchmessers $d_{50}$**

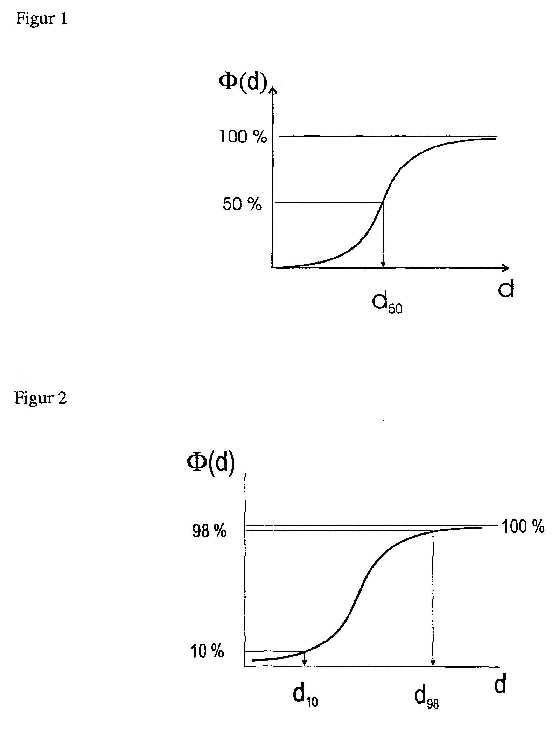

Die Bestimmung des mittleren Partikeldurchmessers $d_{50}$ wurde mittels Laser auf einem Malvern Master Sizer nach der Standardmethode durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert (vgl. **Figur 1**).

**Messung des SPAN 98**

Die Bestimmung des SPAN 98 wurde mit dem gleichen Messgerät durchgeführt wie bei der Bestimmung des mittleren Durchmessers $d_{50}$ beschrieben. Der SPAN 98 ist dabei wie folgt definiert:

$$SPAN\,98 = \frac{d_{98} - d_{10}}{d_{50}}$$

Für die Ermittlung von $d_{98}$ und $d_{10}$ wird wiederum die Summenkurve der Partikelgrößenverteilung zu Grunde gelegt. Der Schnittpunkt des 98 %-Ordinatenwertes mit der Summenkurve liefert auf der Abszissenachse den gewünschten $d_{98}$-Wert, und der Schnittpunkt des 10 %-Ordinatenwertes der Summenkurve liefert auf der Abszissenachse den gewünschten $d_{10}$-Wert (vgl. Figur 2).

**Haftung zwischen den Schichten**

Das Folienmuster (300 mm längs · 180 mm quer) wird vor dem Verkleben auf einen glatten Karton (200 mm längs · 180 mm quer; ca. 400 g/m², gebleicht, Außenlagengestrichen) gelegt, die überstehenden Folienenden sind auf die Rückseite umzuschlagen und mit Klebeband zu fixieren.

Die Verklebung der Folie gemäß der vorliegenden Erfindung mit einer Standardpolyesterfolie von 12 $\mu$m Dicke erfolgt mit einem Rakelgerät und Rakelstab Nr. 3 der Fa. Erichsen, wobei ca. 1,5 ml Klebstoff (Novacote NC 275+CA 12; Mischverhältnis: 4/1+ 7 Teile Ethylacetat) auf die Deckschicht A der Folie gemäß der vorliegenden Erfindung aufgetragen wird. Nach dem Auslüften des Lösemittels wird die Standardpolyesterfolie mit einer Metallrolle (Breite 200 mm, Durchmesser 90 mm, Masse 10 kg, nach DIN EN 20 535) auf die Deckschicht A der Folie gemäß der vorliegenden Erfindung aufkaschiert. Die Parameter der Kaschierung sind:

| | |
|---|---|
| Klebstoffmenge: | 5 ± 1 g/m² |
| Lüften nach Auftrag des Klebers: | 4 min ± 15 s |
| Rakelstärke (Erichsen): | 3 |
| Geschwindigkeitsstufe des Rakels: | ca. 133 mm/s |
| Aushärtzeit des Verbundes: | 2 h bei 70 °C in einem Umluftofen |

Mit einem 20 ± 1 mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigen Klebebands mit der Rückseite der Folie vollflächig auf einem Trägerblech zu fixieren. Die Platte mit dem aufgeklebten Verbund ist auf einem Peel-Tester zu fixieren. Das nicht kaschierte Ende der Standard-Polyesterfolie ist so in die Kluppe des Peel-Testers (z. B. Instron, Zwick) einzuspannen, dass sich ein Schälwinkel von 180° ergibt. Angegeben wird die mittlere Schälkraft in N/15 mm, gerundet auf eine Stelle nach dem Komma.

| | |
|---|---|
| Probenbreite | 20 mm |
| Messlänge: | 25 mm |
| Abzugsgeschwindigkeit bis Vorkraft: | 25 mm/min |
| Vorweg: | 5 mm |
| Prüfweg: | 40 mm |
| Empfindlichkeit: | 0,01 N |
| Abzugsgeschwindigkeit: | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist. Eine Schichtablösung der Deckschicht A von der Basisschicht B der Folie gemäß der vorliegenden Erfindung kann beispielsweise mittels UV-Lampe nachgewiesen werden. Befindet sich auf dem Kleber Copolymeres aus PEN und PET, so leuchtet bei Bestrahlung dieser Schicht mittels UV Lampe das UV-Licht bläulich auf.

**Beispiele**

Die folgenden Beispiele illustrieren die Erfindung. Die verwendeten Produkte (Warenzeichen und Herstellerfirma) sind jeweils nur einmal angegeben und beziehen sich dann auch auf die nachfolgenden Beispiele.

**Beispiel 1**

Chips aus Polyethylenterephthalat, Polyethylen-2,6-naphthalat und MXD6 wurden in einem Mischungsverhältnis von 40/20/40 Gewichtsteilen direkt dem Extruder (= Zweischneckenextruder mit Entgasung) für die Deckschicht A zugeführt. Dort wurden die Materialien bei einer Temperatur von etwa 275 °C extrudiert. Die Schmelze wurde filtriert, in einer Mehrschichtdüse zu einem Flachfilm ausgeformt und als Deckschicht A der Basisschicht B überlagert.

Chips aus Polyethylenterephthalat wurden bei einer Temperatur von 160 °C auf eine Restfeuchte von weniger als 100 ppm getrocknet und dem Extruder für die Basisschicht B zugeführt. Daneben wurden Chips aus Polyethylenterephthalat und Antiblockmittel ebenfalls bei 160 °C auf eine Restfeuchte von 100 ppm getrocknet und dem Extruder für die Deckschicht C zugeführt. Der Extruder für die Deckschicht C wurde etwa 10 K höher betrieben als Coextruder A.

Durch Koextrusion und anschließende stufenweise Orientierung in Längs- und Querrichtung wurde eine transparente dreischichtige Folie ABC mit einer Gesamtdicke von 12 μm hergestellt. Die Deckschicht A hatte eine Dicke von 1,3 μm und die Deckschicht C eine Dicke von 1,0 μm.

Die freie Oberfläche der Deckschicht A der Folie wurde in einem in der Industrie üblichen Metallisierer mit Aluminium unter Vakuum bedampft. Die Beschichtungsgeschwindigkeit betrug dabei 5 m/s.

Deckschicht A:

| | |
|---|---|
| 40 Gew.-% | Poly(m-xylol-adipinamid) (MXD6) der Fa. Mitsubishi Gas Chemical Co., Produktname Nylon MXD6 |
| 20 Gew.-% | Polyethylen-2,6-naphthalat (® Polyclear P 100 Prepolymer von Invista/Offenbach) mit einem SV-Wert von 600 |
| 40 Gew.-% | Polyethylenterephthalat (4023 von Invista/Offenbach) mit einem SV-Wert von 800 |

Basisschicht B:

| | |
|---|---|
| 100 Gew.-% | Polyethylenterephthalat (4023 von Invista/Offenbach) mit einem SV-Wert von 800 |

Deckschicht C:

| | |
|---|---|
| 80 Gew.-% | Polyethylenterephthalat mit einem SV-Wert von 800 |

(fortgesetzt)

Deckschicht C:

20 Gew.-%    Masterbatch aus 97,75 Gew.-% Polyethylenterephthalat (SV-Wert von 800) und 1,0 Gew.-% Sylobloc 44 H (synthetisches $SiO_2$ der Fa. Grace) und 1,25 Gew.-% Aerosil TT 600 (kettenartiges $SiO_2$ der Fa. Degussa)

Die Herstellungsbedingungen in den einzelnen Verfahrensschritten waren:

| | | | | |
|---|---|---|---|---|
| Extrusion | Temperaturen | | A-Schicht: | 275 °C |
| | | | B-Schicht: | 290 °C |
| | | | C-Schicht | 285 °C |
| | Temperatur der Abzugswalze | | | 25 °C |
| Längsstreckung | Strecktemperatur | | | 115 °C |
| | Längsstreckverhältnis | | | 4,0 |
| Querstreckung | Strecktemperatur | | | 125°C |
| | Querstreckverhältnis | | | 3,9 |
| Fixierung | Temperatur | | | 230 °C |
| | Dauer | | | 3 s |

Die Folie hatte die geforderte Sauerstoffbarriere und die geforderte Haftung der Schichten untereinander.

**Beispiel 2**

Wie in Beispiel 1 wurde durch Koextrusion eine dreischichtige Folie ABC mit einer Gesamtdicke von 12 μm hergestellt. Die Deckschicht A hatte eine Dicke von 1,8 μm und die Deckschicht C eine Dicke von 1,0 μm. Die freie Oberfläche der Deckschicht A der Folie wurde in einem in der Industrie üblichen Metallisierer mit Aluminium unter Vakuum bedampft. Die Beschichtungsgeschwindigkeit betrug 5 m/s.

**Vergleichsbeispiel VB1**

Es wurde eine Folie entsprechend Beispiel 8 der EP-A-0 878 298 hergestellt. Die auf der Deckschicht A metallisierte Folie hatte die geforderte Sauerstoffbarriere, die Haftung zwischen den Schichten A und B war jedoch äußerst gering.

**Vergleichsbeispiel VB2**

Es wurde eine Folie entsprechend Beispiel 1 der US-A 5,795,528 hergestellt. Im Vergleich zum Beispiel aus der US-A 5,795,528 wurden jedoch nur 2 Schichten aus PEN und PET gewählt. Die auf der PEN-Oberfläche metallisierte Folie hatte die geforderte Sauerstoffbarriere, die Haftung zwischen den Schichten A und B war jedoch äußerst gering.
Die Eigenschaften der gemäß den Beispielen 1 und 2 und den Vergleichsbeispielen VB1 und VB2 hergestellten Folien sind in Tabelle 2 zusammengestellt.

Tabelle 2

| | Foliendicke in μm | Folienaufbau | Schichtdicken in μm | | | Sauerstoffpermeation | Haftung zwischen den Schichten | Rauigkeit von Deckschicht A | Glanz A-Seite (60°-Messwinkel) | Wickelverhalten | Verarbeitungsverhalten |
|---|---|---|---|---|---|---|---|---|---|---|---|
| | | | A | B | C | $cm^3/(m2 \cdot bar \cdot d)$ | N/15 mm | nm | | | |
| B1 | 12 | ABC | 1,3 | 9,7 | 1 | 0,2 | 2 | 35 | 163 | ++++ | ++++ |
| B2 | 12 | ABC | 1,8 | 9,2 | 1 | 0,15 | 2,5 | 34 | 167 | ++++ | ++++ |
| | | | | | | | | | | | |
| VB 1 | 12 | ABC | 3 | 7,5 | 1,5 | 0,07 | 0,1 | 22 | 170 | ++ | + |
| VB 2 | 12 | ABAB | | | | 0,1 | 0,1 | | | - | - |

Zeichenerklärung beim Wickel- und beim Verarbeitungsverhalten der Folien:

++++ keine Klebeneigung an Walzen oder anderen mechanischen Teilen, keine Blockprobleme beim Wickeln und bei der Verarbeitung auf Verpackungsmaschinen, niedrige Herstellkosten

+ mittlere Herstellkosten

- Klebeneigung an Walzen oder anderen mechanischen Teilen, Blockprobleme beim Wickeln und bei der Verarbeitung auf Verpackungsmaschinen, hohe Herstellkosten durch aufwändiges Handling der Folie in den Maschinen

**Patentansprüche**

1. Biaxial orientierte Polyesterfolie mit einer Basisschicht B, die zu mindestens 80 Gew.-% aus einem thermoplastischen Polyester besteht, mindestens einer Deckschicht A und einer auf der Deckschicht A aufgebrachten metallischen oder keramischen Schicht D, wobei die Deckschicht A aus einem Gemisch von Homo- und/oder Copolymeren aufgebaut ist, das

    • Ethylenterephthalat und/oder Ethylenisophthalat-Einheiten in einer Menge von 5 bis 65 Gew.-%,
    • Ethylen-2,6-naphthalat-Einheiten in einer Menge von 20 bis 80 Gew.-% und
    • Poly(m-xylol-adipinamid) (MXD6) in einer Menge von 15 bis 40 Gew.-% enthält, jeweils bezogen auf das Gesamtgewicht der Deckschicht A.

2. Folie gemäß Anspruch 1, **dadurch gekennzeichnet, dass** die Deckschicht A eine Dicke von mehr als 0,9 $\mu$m besitzt, bevorzugt eine Dicke von 1,0 bis 10 $\mu$m und besonders bevorzugt eine Dicke von 1,1 bis 5 $\mu$m.

3. Folie gemäß einem oder mehreren der Ansprüche 1 bis 2, **dadurch gekennzeichnet, dass** sie eine Sauerstoffpermeation von weniger als 0,4 cm$^3$/(m$^2$·bar·d), bevorzugt von weniger als 0,35 cm$^3$/(m2·bar·d), besonders bevorzugt weniger als 0,3 cm$^3$/(m2·bar·d), aufweist.

4. Folie gemäß einem oder mehreren der Ansprüche 1 bis 3, **dadurch gekennzeichnet, dass** die Haftung zwischen den einzelnen Schichten von 1,0 bis 10 N/15 mm, bevorzugt von 1,2 bis 10 N/15 mm und besonders bevorzugt von 1,5 bis 10 N/15 mm, beträgt.

5. Folie gemäß einem oder mehreren der Ansprüche 1 bis 5, **dadurch gekennzeichnet, dass** sie dreischichtig aufgebaut ist und eine Basisschicht B, eine Deckschicht A und eine Deckschicht C enthält.

6. Folie gemäß einem oder mehreren der Ansprüche 1 bis 5, **dadurch gekennzeichnet, dass** mindestens die Deckschicht C pigmentiert ist.

7. Folie gemäß einem oder mehreren der Ansprüche 1 bis 6, **dadurch gekennzeichnet, dass** sie auf mindestens einer Seite in-line beschichtet ist.

8. Folie gemäß einem oder mehreren der Ansprüche 1 bis 7, **dadurch gekennzeichnet, dass** sie auf der Deckschicht A metallisiert oder keramisch beschichtet ist.

9. Verfahren zur Herstellung der Folie nach einem oder mehreren der Ansprüche 1 bis 8, umfassend die Schritte

    • Herstellen einer Folie aus Basis- und Deckschicht(en) durch Koextrusion,
    • biaxiales Strecken der Folie und
    • Thermofixieren der gestreckten Folie und
    • Aufbringen der Metall- oder Keramikschicht auf die thermofixierte Folie, **dadurch gekennzeichnet, dass** das Strecken der Folie in Längsrichtung bei einer Temperatur im Bereich von 80 bis 130 °C und das Strecken der Folie in Querrichtung bei einer Temperatur im Bereich von 90 bis 140 °C durchgeführt wird und dass das Längsstreckverhältnis im Bereich von 2,0:1 bis 5,0:1, bevorzugt von 2,3:1 bis 4,8:1, liegt und das Querstreckverhältnis im Bereich von 2,5:1 bis 5,0:1, bevorzugt von 2,7:1 bis 4,5:1, liegt.

10. Verfahren nach Anspruch 9, **dadurch gekennzeichnet, dass** polymeres Verschnittmaterial, das bei der Folienherstellung anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet wird.

11. Verwendung der Folie nach einem oder mehreren der Ansprüche 1 bis 8 zum Verpacken von Nahrungs- und Genussmitteln.

Figur 1

Figur 2

**European Patent Office**

## EUROPEAN SEARCH REPORT

Application Number

EP 06 00 4521

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/38673 A (VALSPAR CORPORATION; SHARE, PAUL, E; PILLAGE, KEITH, R) 16 May 2002 (2002-05-16) * page 1, line 7 - page 9, line 29; claims 1-39; example 3 * | 1-11 | INV. C08J7/00 C08J7/04 C08L67/00 C08L67/02 C08J5/00 |
| X | PATENT ABSTRACTS OF JAPAN vol. 2002, no. 04, 4 August 2002 (2002-08-04) & JP 2001 347592 A (UNITIKA LTD), 18 December 2001 (2001-12-18) * abstract * | 1-11 | C08J5/18 C08K3/00 |
| X | PATENT ABSTRACTS OF JAPAN vol. 2000, no. 16, 8 May 2001 (2001-05-08) & JP 2001 001399 A (UNITIKA LTD), 9 January 2001 (2001-01-09) * abstract * | 1-11 | |
| X | US 2004/146725 A1 (KONRAD MATTHIAS ET AL) 29 July 2004 (2004-07-29) * paragraphs [0001] - [0068]; claims 1-18; examples 1-3 * | 1-11 | TECHNICAL FIELDS SEARCHED (IPC) C08J C08L |
| X | US 2004/146727 A1 (KLEIN OLIVER ET AL) 29 July 2004 (2004-07-29) * paragraphs [0001] - [0072]; claims 1-16; examples 1-3 * | 1-11 | C08K |
| X | US 2004/146718 A1 (KONRAD MATTHIAS ET AL) 29 July 2004 (2004-07-29) * paragraphs [0001] - [0082]; claims 1-18; examples 1,2 * | 1-11 | |
| X | US 2004/146750 A1 (KLEIN OLIVER ET AL) 29 July 2004 (2004-07-29) * paragraphs [0001] - [0089]; claims 1-19; examples 1,2 * | 1-11 | |

-/--

The present search report has been drawn up for all claims

| Place of search | Date of completion of the search | Examiner |
|---|---|---|
| Munich | 24 May 2006 | Kiebooms, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 00 4521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 1 609 814 A (MITSUBISHI POLYESTER FILM GMBH) 28 December 2005 (2005-12-28) * the whole document * ----- | 1-11 | |
| X,P | EP 1 609 813 A (MITSUBISHI POLYESTER FILM GMBH) 28 December 2005 (2005-12-28) * the whole document * ----- | 1-11 | |
| X,P | EP 1 609 812 A (MITSUBISHI POLYESTER FILM GMBH) 28 December 2005 (2005-12-28) * the whole document * ----- | 1-11 | |
| X,P | EP 1 609 596 A (MITSUBISHI POLYESTER FILM GMBH) 28 December 2005 (2005-12-28) * the whole document * ----- | 1-11 | |

TECHNICAL FIELDS
SEARCHED      (IPC)

The present search report has been drawn up for all claims

| Place of search | Date of completion of the search | Examiner |
|---|---|---|
| Munich | 24 May 2006 | Kiebooms, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 00 4521

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2006

| Patent document cited in search report | | Publication date | Patent family member(s) | | Publication date |
|---|---|---|---|---|---|
| WO 0238673 | A | 16-05-2002 | AU | 2002402 A | 21-05-2002 |
| | | | AU | 2586602 A | 21-05-2002 |
| | | | BR | 0115231 A | 14-10-2003 |
| | | | CA | 2429033 A1 | 16-05-2002 |
| | | | CA | 2436826 A1 | 16-05-2002 |
| | | | EP | 1339796 A2 | 03-09-2003 |
| | | | EP | 1348006 A2 | 01-10-2003 |
| | | | MX | PA03004050 A | 11-04-2005 |
| | | | MX | PA03004051 A | 11-04-2005 |
| | | | WO | 0238674 A2 | 16-05-2002 |
| JP 2001347592 | A | 18-12-2001 | NONE | | |
| JP 2001001399 | A | 09-01-2001 | NONE | | |
| US 2004146725 | A1 | 29-07-2004 | DE | 10302033 A1 | 29-07-2004 |
| | | | EP | 1440793 A1 | 28-07-2004 |
| | | | JP | 2004224048 A | 12-08-2004 |
| US 2004146727 | A1 | 29-07-2004 | DE | 10302036 A1 | 29-07-2004 |
| | | | EP | 1457318 A1 | 15-09-2004 |
| | | | JP | 2004224051 A | 12-08-2004 |
| US 2004146718 | A1 | 29-07-2004 | DE | 10302034 A1 | 29-07-2004 |
| | | | EP | 1457316 A1 | 15-09-2004 |
| | | | JP | 2004224049 A | 12-08-2004 |
| US 2004146750 | A1 | 29-07-2004 | DE | 10302035 A1 | 29-07-2004 |
| | | | EP | 1457317 A1 | 15-09-2004 |
| | | | JP | 2004224050 A | 12-08-2004 |
| EP 1609814 | A | 28-12-2005 | DE | 102004030977 A1 | 19-01-2006 |
| | | | JP | 2006007779 A | 12-01-2006 |
| | | | US | 2005287378 A1 | 29-12-2005 |
| EP 1609813 | A | 28-12-2005 | DE | 102004030978 A1 | 19-01-2006 |
| | | | JP | 2006009023 A | 12-01-2006 |
| | | | US | 2005287380 A1 | 29-12-2005 |
| EP 1609812 | A | 28-12-2005 | DE | 102004030979 A1 | 19-01-2006 |
| | | | JP | 2006009024 A | 12-01-2006 |
| | | | US | 2005287382 A1 | 29-12-2005 |
| EP 1609596 | A | 28-12-2005 | DE | 102004030980 A1 | 19-01-2006 |
| | | | JP | 2006009025 A | 12-01-2006 |
| | | | US | 2005287381 A1 | 29-12-2005 |

EPO FORM P0459

For more details about this annex : see Official Journal of the European Patent Office, No. 12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0878298 A
- EP 1179419 A
- US 5795528 A